# EUROPEAN PATENT APPLICATION

(11) **EP 0 666 224 A1**
(43) Date of publication of application: **09.08.1995**
(21) Application number: 95300686.3
(22) Date of filing: 03.02.1995
(51) Int. Cl.: B65D 75/36, A61C 15/04

(54) **Dental floss display/dispenser**

(30) Priority: 04.02.1994 BR 9400259
(71) Applicant: JOHNSON & JOHNSON CONSUMER PRODUCTS, INC., Skillman, New Jersey 08558 (US)
(72) Inventor: Falleiros, Alexandra P., Sao Jose dos Campos, Sao Paulo (BR); Reinesch, Bernard, Sao Jose dos Campos, Sao Paulo (BR); Lima, Paulo R. B., Sao Jose dos Campos, Sao Paulo (BR); Soares, Antonio J. P., Sao Jose dos Campos, Sao Paulo (BR)
(74) Representative: Mercer, Christopher Paul

(57) **Abstract**

This invention concerns a container package for dental floss or tape that is both a dispenser and a display, for example for points of sale.

## Description

This invention concerns a dental floss package container that is both a dispenser and a display for points-of-sale, such as drugstore counters and supermarket stands.

In the present state of the art containers that are dental floss dispensers are well known (any reference herein to dental floss is to be construed as also including similar filiform materials, such as dental tape). Reference is made to parallelepiped or cylindrical boxes, generally made of plastic, provided with internal braces that allow for free rotation of a dental floss feed reel, besides a brim or blade to cut the amount of floss taken out.

However, when displayed for sale such dispensers are generally placed inside an additional package, for example a "blister" container, composed of:
- a flat base, upon which lies the dispenser, optionally provided with an orifice that allows for the container to be hanged;
- a covering or wrapper, generally transparent, that fully covers the flat base and the dispenser.

Therefore, an additional packaging item is used today to display a dental floss dispenser for sale and which, even though efficient in its functions of displaying an article to the consumer, represents an additional cost.

One attempt to overcome this problem is presented in the American patent US5190200. In that document, a single cardboard leaf is cut and folded to form a parallelepiped box provided with a brim, which is used to hang the package and that may taken out after purchase.

Although said document has disclosed a dental floss dispenser/display device, it has a poor outlook, since the box gets easily crumpled, acquiring a not so pleasant appeal to the eyes of the consumer. Furthermore the dental floss reel is loose inside the package, subject to contamination by an extensive contact with the inside coating material of the box and subject also to get all tangled up as the floss approaches the end of the reel.

In view of all the problems encountered to this date, an inexpensive and efficient device has been developed, without the inconveniences of the prior art, provided with aesthetic qualities similar to a blister package for product display, with an excellent functional performance as a dental floss dispenser.

It concerns a dental floss display/dispenser device which characteristic features include the following:
- at least one dental floss reel,
- a front sheet and a back sheet, associated so as to contain said dental floss reel between them.
- a support means for said dental floss reel;
- an outlet means for said dental floss and
- a cutting means for said dental floss.

The term "association" as related to the front and back sheets shall be construed as including any manner of overlay and/or fixing of them, so as to permit the creation of a space or receptacle for a dental floss reel or spool.

A preferred embodiment of the invention is as follows: the back sheet is a rectangular flat sheet on which lies a dental floss reel, in such a manner that the central axis of the real lies orthogonal to said flat sheet. The front sheet, transparent and properly formed by thermoforming, overlays the back sheet, making up a receptacle for said reel, while a part of its surface forms a housing turned towards the inside of the reel core, performing an axis function that allows for a free rotation of said reel, as an amount of floss is pulled out by user (It is the embodiment of the support means for the floss reel).

The back and front sheets are joined, for instance alongside their rims, and the front sheet is provided with an orifice through which the thread comes out of said receptacle. A small metallic brim, outside said receptacle, serves as cutting means for the floss. An orifice perforated in the joined area between the back and back sheets [*sic*] on the top area of the device allows it to be hanged on any type of rod, permitting the package to be displayed for sale.

The front sheet may be made up of any material. In a specific embodiment of the invention, it is made up of transparent material, for instance plastic or glass, to permit the dental floss reel inside the article to be seen. In a preferred embodiment, the front sheet is made of a material that might be formed by vacuum thermoforming, such as, for instance, polyvinyl chloride, polystyrene or polypropylene, so that its surface may be formed to serve as an axis means, i.e., to support the rotation of the dental floss reel.

In keeping with the meaning adopted herein, thermoforming consists in heating a thermoplastic material, generally a film, until it reaches a temperature high enough to be softened, and then - by means of mechanical pressure, vacuum or compressed air - it is forced onto a mold surface to shape it.

The back sheet is generally a flat sheet, in any adequate profile from an aesthetic point of view, and it may be made up of any adequate material, such as paper, plastic, non fabric, metal, laminates and compounds of these and other materials. Within a particular embodiment of the invention, this material is adequate to be printed with words and devices referring to the product displayed. Within another particular embodiment of the invention, a vinyl resin coaled paper is used, such as, for instance paper coated with polyvinyl chloride or polyvinylidene chloride, permitting hot sealing with the front sheet. Preferably, the back sheet presents a sufficient rigidity to avoid an easy deformation of the whole set to which it belongs, that would degrade the aesthetic and functional standards aimed at by the device.

The back sheet, within an optional embodiment of the invention, may be capable of being vacuum thermoformed. In this manner, its surface - and not the surface of the front sheet - may be molded to serve as means of support for the dental floss reel.

Another alternative within the scope of the invention is that of having both the front and the back sheet vacuum thermoformed, whereby both of them are molded so that their surfaces serve, when combined, as support means for the dental floss reel

The front and the back sheets face partially or totally one another, to concretize a sufficient space to contain at least one dental floss reel. The peripheral rims of the back and front sheets may or may not coincide.

The front and the back sheets may optionally be of the same material, for instance, contiguous areas of the same strip of material, provided with a told between them in such a manner that one sheet overlays the other.

The generic purpose of the dental floss reel support means is to allow for an unhampered rotation of the floss containing reel, without any type of hooking or tangle, and preferably without any extensive contact of the reel with the walls of the receptacle where it is contained.

The support means for the dental floss reel may be a protuberant area of the front sheet surface, or of the back sheet, or both, as above mentioned. Such surface extension may present itself as a protuberance that gradually gets thinner until penetrating into the core of the dental floss reel, serving as its axis, or it can also present itself as a surface around the dental floss reel, thus creating a peripheral limitation to its side displacement.

The support means for the dental floss reel may also be a separate part from the back or back sheets [*sic*], but fixed to one of them, or to both, such as for instance:
- a cylindrical body, fixed only onto the front sheet, or only onto the back sheet, with the other end penetrating into the core of the dental floss reel, serving as an axis to it;
- a body as above, but fixed both to the front and the back sheets;
- a cone-shaped body -- or similar to a cone trunk, fixed by its larger base just to the back sheet, or just to the front sheet, with its smaller end penetrating into the core of the dental floss reel, allowing its rotation.
- a T-shaped body, provided with a central stem and a top stem at a straight angle with the first one, with the top stem of the T fixed just to the back sheet, or just to the front sheet, while the dental floss reel spins around the central stern of the T, operating as an axis.

In an optional manner, the support means for the dental floss reel may also be a separate part from the front and back sheets, associated with but not fixed to them, such as for instance, a cone-shaped solid body, or similar to a cone trunk, where the larger base (with a larger diameter than the diameter of the dental floss reel, to provide sufficient immobility within the receptacle) is supported by the back sheet and the smaller base is supported by the front sheet, with a dental floss reel adapted to its body so as to be able to roll.

In general terms, the support means for the dental floss reel may be made of any material and have any shape that conform to the operating and aesthetic needs, as long as permitting the rotation of said reel, including for instance the following manners:
- extension of the front sheet, or back sheet surface, or of both surfaces;
- a separate element from the front and back sheets, fixed to one of them or to both;
- a separate element from the front and back sheets, cooperating with one of them, or with both, without being directly fixed to any of them.

The dental floss reel included in this present invention is, preferably, a hollow piece around which the floss is rolled, in such a manner that a supporting means may penetrate inside and act as axis. This configuration of support means for the floss reel does not exclude any other possibility known to the man of the technique in this area.

The outlet means for said dental floss is generally an orifice, located in any point of the invention device. For instance, it can also be a strip alongside which the back and back sheets are not joined.

The cutting means for said dental floss can be any one, for instance a plastic or metallic brim that permits cutting or shearing of the thread at the desired length.

An optional embodiment of this present invention includes a hanging means for the display/dispenser device, preferably an orifice allowing it to hang from any rod, to keep it in display in an adequate manner. As an optional manner, the hanging means may include hooks, adhesive strips, brims or loops, any combination of these among them or with other items, preferably located in the top area of the display/dispenser device.

In a specific manner of embodiment of the invention, the back sheet is a rectangular paper sheet and the receptacle for the dental floss reel, formed by the overlay with the back sheet, is located in the tower half of the rectangle. This lower half of the rectangle also contains the outlet means and cutting means for the dental floss. The top half of said rectangle contains the proper orifice to hang the device for display. A dotted or weakened line permits to separate the top from the lower half of the device, so that the consumer may discard the top portion, if so desired.

There follows below a description of drawings enclosed to this document, representing some of the options contained within the scope of the invention, with no concern for exact proportions or dimensions, since their purpose is just to illustrate the invention in a simple manner. Such fact does not restrict in any manner whatsoever the extent of the invention, as determined by what is set forth in the appended claims.

Brief description of the figures

Figures 1 show a first alternative for the invention, with FIG. 1A presenting a front view and FIG. 1B a longitudinal cut view, as provided by an imaginary plan placed orthogonally to the view plan of FIG. 1A along line AA.

FIG. 2 shows another alternative for the invention, in a longitudinal cut view, similar to the view in FIG. 1A.

FIG. 3 shows another alternative for the invention, in a longitudinal cut view, similar to the view in FIG. 1A.

FIG. 4 shows another alternative for the invention, in a longitudinal cut view similar to the view in FIG. 1A.

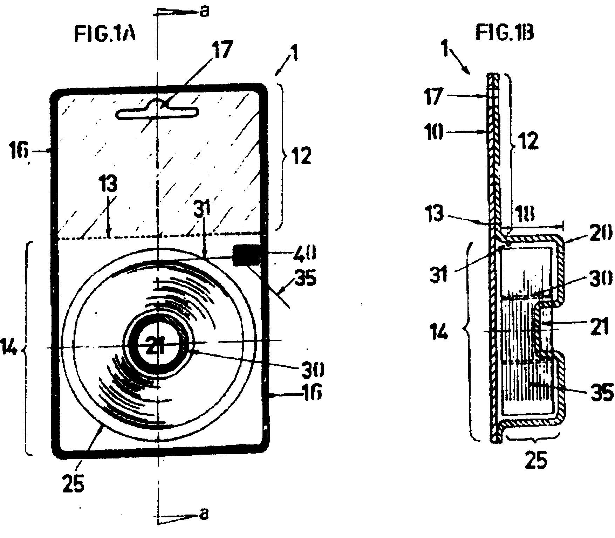

Figures 1A and 1B show a dental floss display/dispenser device 1, composed of:
- one back sheet 10, made of art paper, of 90 grams per sq. meter, coated with polyvinylidene chloride;
- one thermoformed front sheet 2, made of transparent polyvinyl chloride, 0.3 mm thick
- one reel 30 made of injected polypropylene, supporting dental floss 35 wound around it.

Device 1 includes a top area 12 and a lower area 14, and the proportion between both areas in this specific example is approximately 2/5 to 3/5. Such areas 12 and 14 are contiguous, and they may be separated by breaking up along the weakened dividing line 13.

Back sheet 10 and front sheet 20 are hot sealed together (by fusion of the resin included in the back sheet 10) along the peripheral rims 16 approximately 5 mm thick and along the top area 12.

The area 12 is provided with an orifice 17 to hang the device 1.

The reel 30 for the dental floss 35 is located in the bottom area 14, inside the receptacle 25 formed by overlay of sheets 10 and 20.

The receptacle 25 is concretized by a deformation forced onto the front sheet 20 by thermoforming, so as to be placed at a distance 18 of the back sheet 10, slightly larger than the thickness of reel 30, excepting for the area of the housing 21 that operates as an axis means for the reel 30.

Device 1 is further provided with:
- a cutting brim 40 made of stainless steel to cut the dental floss 35 at the length desired by user,
- an orifice 31 in the front sheet 2 where the floss 35 comes out of the receptacle 25.

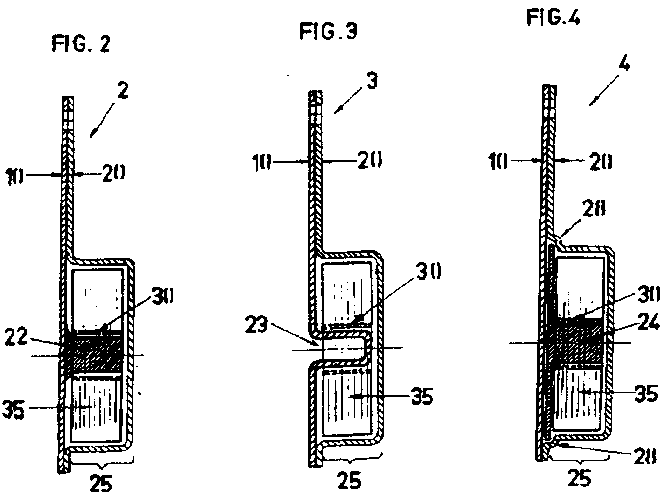

FIG. 2 shows another optional embodiment of the invention, where the support means for the reel 30 in a dental floss display/dispenser 2 no longer constitutes the housing 21 shown in FIG. 1A and is embodied in a support 22 similar to a cone trunk, joined by its larger base to the back sheet 10.

FIG. 3 shows another optional embodiment of the invention where the support means for the reel 30 in a dental floss display/dispenser 3 no longer constitutes the housing 21 shown in FIG. 1A and is embodied as a housing 23 which is an extension of the back sheet 10 - in this case the material of back sheet 10 must be appropriate for this use, for instance polyvinyl chloride if thermoforming is chosen.

FIG. 4 shows another optional embodiment of the invention where the support means for the reel 30 in a dental floss display/dispenser 4 no longer constitutes the housing 21 shown in FIG. 1A and is embodied as a T-shaped support 24, independent of the back sheet 10 and front sheet 20, but with a parallel or orthogonal movement in relationship to the back sheet 10, limited by the shape of the housing 25, in this particular case provided with accommodation brims 28.

## Claims

**1.** Dental floss display/dispenser device (1, 2, 3, 4) comprising:
at least one reel (30) of dental floss (35);
one back sheet (10) and one front sheet (20) associated so as to contain (25) between them said dental floss reel;
a support means for said dental floss reel (21, 22, 23, 24);
an outlet means for said dental floss (31); and
a cutting means for said dental floss (40).

**2.** The device of claim 1 which includes additionally a hanging means (17).

**3.** The device of claim 1 or claim 2 which includes additionally a weakened line (13) that permits the separation of the top part (12) from the bottom part (14) of said device (1).

**4.** The device of any one of claims 1 to 3 wherein said back sheet (10) is made of any material chosen among the following: paper, plastic, metal and laminate of one of these with one or more of the remaining ones.

**5.** The device of claim 4 wherein said back sheet is made of vinyl resin coated paper, preferably paper coated with polyvinyl chloride or polyvinylidene chloride.

**6.** The device of any one of claims 1 to 5 wherein said front sheet is made of transparent material.

**7.** The device of any one of claims 1 to 6 wherein said front sheet and/or said back sheet are made of any material that might be molded by thermoforming.

**8,** The device of any one of claims 1 to 7 wherein said support means for said dental floss reel is an extension of said front sheet and/or said back sheet.

**9.** The device of any one of claims 1 to 7 wherein said support means for said dental floss reel is a separate body from said front and back sheets, but fixed to one of them or both.

**10.** The device of any one of claims 1 to 7 wherein said support means for said dental floss reel is a separate body from said front and back sheets, cooperating with them, without being fixed to any of them.

**11.** The device of any one of claims 1 to 10 wherein said front and back sheets are made of the same material, preferably contiguous areas of a material strip.
